# EUROPÄISCHE PATENTSCHRIFT

(11) **EP 1 121 545 B1**
(45) Veröffentlichungstag und Bekanntmachung des Hinweises auf die Patenterteilung: **31.07.2002**
(21) Anmeldenummer: 99952533.0
(22) Anmeldetag: 06.10.1999
(51) Int. Cl.: F16H 61/02

(54) **UNTER LAST SCHALTBARES WENDEGETRIEBE**
REVERSING GEAR-BOX WHICH CAN BE SHIFTED WHEN UNDER LOAD
BOITE INVERSEUSE COUPLABLE SOUS CHARGE

(30) Priorität: 12.10.1998 DE 19846955
(43) Veröffentlichungstag der Anmeldung: 08.08.2001
(73) Patentinhaber: ZF FRIEDRICHSHAFEN Aktiengesellschaft, 88038 Friedrichshafen (DE)
(72) Erfinder: LEGNER, Jürgen, D-88048 Friedrichshafen (DE); HEILIG, Eduard, D-88048 Friedrichshafen (DE)
(86) Internationale Anmeldenummer: EP9907512
(87) Internationale Veröffentlichungsnummer: WO0022323

(56) Entgegenhaltungen:
- EP-A- 0 721 074
- EP-A- 0 818 629
- DE-A- 19 517 888
- US-A- 4 706 549

## Beschreibung

Die Erfindung betrifft ein unter Last schaltbares Wendegetriebe, welches vorzugsweise mit einem hydrodynamischen Drehmomentwandler, einer Ein- und Ausgangswelle, mindestens einer Vorgelegewelle und Zahnrädern, die einen Wendesatz bilden, sowie Schaltkupplungen mit Losrädern, die Betätigungseinrichtungen aufweisen und zur Richtungsschaltung wahlweise drehfest mit der Eingangs- oder Vorgelegewelle verbindbar sind, ausgeführt ist.

Bei dem Getriebe der vorstehend geschilderten Gattung handelt es sich um ein Wendegetriebe, wie es insbesondere in Flurförderfahrzeugen, wie beispielsweise Staplern, eingesetzt wird. Es-kann sich darüber hinaus aber auch um die Eingangsbaugruppe eines mehrgängigen Wendegetriebes handeln, wie es insbesondere in Baumaschinen, wie z. B. Radladern, Verwendung findet. Lastschaltbare Wendegetriebe zeichnen sich durch eine Reihe von Vorteilen aus. Diese Getriebe sollen kompakt bauen und komfortabel zu schalten sein. Hinzu zählt vor allem auch, daß die hydraulisch betätigbaren Schaltkupplungen durch Modulation des Betätigungsdrucks derart geschaltet werden, daß eine gesteuerte Lastübernahme vorliegt. Bei bestimmten Fahrzeugen, beispielsweise bei Flurförderfahrzeugen, wie Gabelstaplern oder dergleichen, sind neben dem Reversierbetrieb weitere Betriebszustände von Bedeutung. Hierzu zählen vor allem das Anfahren, das Inchen und das Bremsen.

In der DE 195 17 888 die als nächstliegender Stand der Technik angesehen wird, ist ein unter Last schaltbares Wendegetriebe mit hydrodynamischem Wandler offenbart, bei welchem die Schaltkupplungen als Negativkupplungen ausgeführt sind. Die Modulation der Schaltkupplungen während der Wendeschaltung wird mittels des Federspeichers und der über eine Blende abfließenden Ölmenge erreicht. Hierbei muß gewährleistet sein, daß sich in den Kolbenräumen der Schaltkupplungen und in den Leitungen ausschließlich Druckmittel und keine Luft befindet, da dadurch die Modulation der Schaltelemente nachteilig beeinflußt wird, da sich beim Druckabbau die komprimierte Luft entspannt und dadurch die Schaltzeit verändert. Da beim Betrieb des Antriebs durch die Rotation der Verzahnung eine bestimmte Menge Luft in das Druckmittel gelangen kann, kann bei dem offenbarten Getriebe nicht verhindert werden, daß durch die Pumpe angesaugtes, mit Luft vermengtes Druckmittel bei einer Schaltung in die Leitungen und Kolbenräume gelangen kann.

Der vorliegenden Erfindung liegt die Aufgabe zugrunde, ein Wendegetriebe zu schaffen, das sich dadurch auszeichnet, daß die Kolbenräume und deren Zuleitungen luftfrei mit Druckmittel gefüllt sind und während des Betriebs luftfrei bleiben und sich bei der Erstinbetriebnahme des Antriebs selbst entlüften und mit Druckmittel befüllen.

Erfindungsgemäß wird die Aufgabe durch die im kennzeichnenden Teil von Anspruch 1 genannten Merkmale gelöst. Der Kolbenraum besitzt eine erste Bohrung zur Druckmittelzuführung, welche vorzugsweise an der höchsten Stelle des Kolbenraums angebracht ist und durch welche der Kolbenraum mit Hilfe einer Betätigungseinrichtung entweder mit dem Druckmittel, welches von einer Pumpe gefördert wird oder über eine Blende mit einem Ölreservoir verbunden werden kann. Indem am Kolbenraum eine zweite Zulaufbohrung angebracht ist, welche räumlich unter der ersten Zulaufbohrung angebracht ist und ständig mit dem Förderstrom der Pumpe, jedoch auf einem geringeren Druckniveau, verbunden ist, durchfließt Druckmittel immer dann den Kolbenraum, wenn die obere Zulaufbohrung über die Betätigungseinrichtung mit dem Ölreservoir verbunden ist. Dadurch wird im Kolbenraum befindliche Luft durch das einströmende Druckmittel durch die untere Zulaufbohrung aus dem Kolbenraum in die obere Zulaufbohrung verdrängt, durch welche sie über die Blende in das Ölreservoir abfließen kann. Ein Rückschlagventil in der unteren Zulaufbohrung verhindert ein Abfließen der Druckflüssigkeit in die untere Zulaufbohrung, wenn die obere Zulaufbohrung über die Betätigungseinrichtung mit der Pumpe verbunden wird, um die Kupplung zu öffnen. Eine Blende in der unteren Zulaufbohrung, welche dergestalt ausgelegt ist, daß verhindert wird, daß die Menge des zulaufenden Druckmittels durch die untere Zulaufbohrung größer ist als die abfließende Menge, welche durch die obere Zulaufbohrung durch eine Blende in das Ölreservoir abfließt. Dadurch wird verhindert, daß sich ein ungewollter Druck im Kolbenraum aufbaut. Das unter Last schaltbare Wendegetriebe besitzt mindestens zwei Wendekupplungen, bei denen wahlweise immer eine Kupplung über die Betätigungseinrichtung mit der Pumpe verbunden ist. Dadurch befindet sich eine Kupplung in geöffnetem Zustand und das Rückschlagventil in der unteren Zuleitung dieser Kupplung wird durch den Druck im Kolbenraum geschlossen. Eine zweite Kupplung wird über die Betätigungseinrichtung über eine Blende mit dem Ölreservoir verbunden und befindet sich in geschlossenem Zustand und deren Kolbenraum wird permanent mit Druckflüssigkeit von der unteren Zulaufbohrung durch die Blende in den Kolbenraum und von dort über die obere Zulaufbohrung in das Ölreservoir durchströmt. Bei einer Wendeschaltung durch Umschalten der Betätigungseinrichtung wird die erste Kupplung mit Druckflüssigkeit durchströmt und dadurch entlüftet, während sie sich in geschlossenem Zustand befindet, und die zweite Kupplung durch Druckflüssigkeit geöffnet. Indem bei der Erstinbetriebnahme durch mehrmaliges Bedienen der Betätigungseinrichtung wahlweise die erste oder die zweite Wendekupplung mit Druckflüssigkeit durchströmt wird, wird in jeder Wendekupplung die vorhandene Luft im Kolbenraum in das Ölreservoir abgeleitet. Dadurch ist gewährleistet, daß auch ohne zusätzliche Entlüftungsvorgänge die Zuleitungen und Kolbenräume luftfrei werden und bleiben. Es besteht jedoch auch die Möglichkeit, die erste Bohrung zur Druckmittelzuführung unterhalb der zweiten Bohrung, durch welche der Kolbenraum immer dann mit Druckflüssigkeit durchströmt wird, wenn die erste Bohrung nicht druckbeaufschlagt ist, anzubringen. In diesem Fall muß jedoch gewährleistet sein, daß der Flüssigkeitsstrom groß genug ist, um die im Kolbenraum vorhandene Luft mitzureißen und abzuführen. Bei einer Wendekupplung, bei welcher die Kupplung über Federkraft geschlossen und durch Aufbringen eines hydraulischen Drukkes im Kolbenraum wieder geöffnet wird und bei welcher sichergestellt ist, daß sich in den Zuleitungen und in den Kolbenräumen keine Luft befindet, ist es möglich, eine immer gleichbleibende Druckmodulation während der Wendeschaltung durchzuführen. Hierzu ist in der Rücklaufleitung zum Ölreservoir eine Blende vorgesehen, zu welcher parallel ein Federspeicher geschaltet ist. Der eingesetzte Speicher ist für Wendeschaltungen ausgelegt. Dies bedeutet, daß er das aus dem Kolbenraum bei Betätigung der Kupplung schlagartig verdrängte Öl fast vollständig aufnimmt. Der anschließende Modulationsvorgang läuft selbsttätig ab, so daß der Fahrer von der Druckmodulation entlastet wird. Die Zeitfunktion zum Schließen einer Schaltkupplung kann durch einfache Variation der Blendenöffnung eingestellt werden.

Weitere, für die Erfindung wesentliche Merkmale sowie die daraus resultierenden Vorteile sind der nachfolgenden Beschreibung eines Ausführungsbeispieles der Erfindung zu entnehmen.

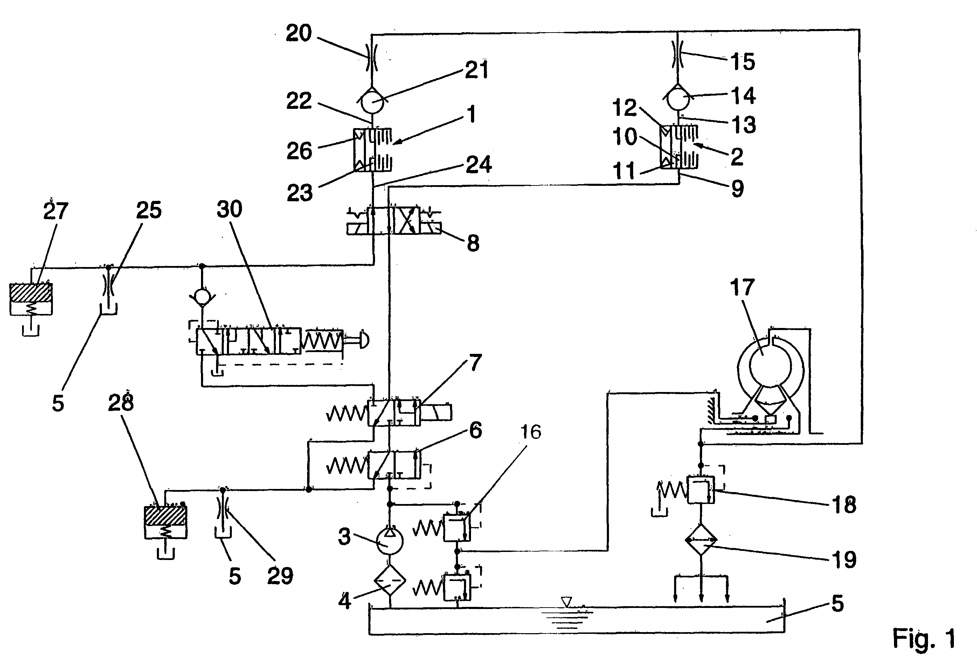

Die einzige Figur zeigt das Schema eines Hydraulikkreislaufes zur Betätigung von Schaltkupplungen des Wendegetriebes.
Durch Schließen der Kupplung 1 und Öffnen der Kupplung 2 wird das Fahrzeug in eine Fahrtrichtung vorwärts bewegt, durch Öffnen der Kupplung 2 und Schließen der Kupplung 1 wird das Fahrzeug in eine Fahrtrichtung rückwärts bewegt, durch Schließen der Kupplung 1 und Schließen der Kupplung 2, also durch Drucklosschalten beider Kupplungen 1, 2, wird das Fahrzeug verblockt, d. h., das Fahrzeug in einen Parkzustand gebremst.
Beim Start eines nicht dargestellten Motors wird die Pumpe 3 angetrieben. Diese saugt über einen Filter 4 Druckflüssigkeit aus einem Ölreservoir 5 und fördert es zu einem Druckabsicherungsventil 6. Wird ein bestimmter Druck erreicht, öffnet das Druckabsicherungsventil 6 und es fördert die Pumpe 3 Druckflüssigkeit zu einem Bremsschaltventil 7, welches in Fig. 1 dergestalt dargestellt ist, daß der Druck der Pumpe 3 nicht zu den Kupplungen 1 und 2 gelangen kann. In diesem Schaltzustand des Bremsschaltventils 7 sind die Kupplungen 1 und 2 mit dem Ölreservoir 5 verbunden und somit geschlossen und das Getriebe in einer Parkstellung verblockt. Wird das Bremsschaltventil 7 in seine zweite Stellung geschaltet, so gelangt die Druckflüssigkeit zum Fahrtrichtungsventil 8 und von dort in der gezeichneten Stellung des Fahrtrichtungsventils 8 über eine Zulaufbohrung 9, welche sich in der oberen Hälfte des Kolbenraums 10 befinden soll und füllt den Kolbenraum 10 mit Druckflüssigkeit. Dabei bewegt sich der Kolben 11 der Kupplung 2 gegen eine Federkraft der Feder 12 und öffnet die Kupplung 2. In der unteren Hälfte des Kolbenraumes 10 befindet sich eine Zulaufbohrung 13, welche ein Rückschlagventil 14 und eine Blende 15 aufweist. Das Rückschlagventil 14 wird vom Druck der Druckflüssigkeit im Kolbenraum 10 geschlossen. Zwischen dem Druckabsicherungsventil 6 und der Pumpe 3 befindet sich ein Druckbegrenzungsventil 16, welches den Druck der Pumpe 3 vorzugsweise auf ca. 30 bar begrenzt. Die Druckflüssigkeit, welche das Druckbegrenzungsventil 16 durchströmt, wird durch einen Wandler 17 geleitet. Ein Teil der Druckflüssigkeit durchströmt ein Druckbegrenzungsventil 18, welches auf vorzugsweise ca. 4 bar eingestellt ist, um nach Passieren eines Wärmetauschers 19 zurück ins Olreservoir 5 zu gelangen. Ein anderer Teil der Druckflüssigkeit wird zwischen dem Wandler 17 und dem Druckbegrenzungsventil 18 über die Blenden 15 und 20 zu den Rückschlagventilen 6 und 21 geleitet. Das Rückschlagventil 14 ist vom Druck der Druckflüssigkeit im Kolbenraum 10 verschlossen. Die Druckflüssigkeit gelangt durch die Blende 20 über das Rückschlagventil 21 über eine im unteren Bereich des Kolbenraums 23 angebrachte Zulaufbohrung 22 und füllt den Kolbenraum 23 mit Druckflüssigkeit. Die Luft im Kolbenraum 23 sowie die nachströmende Druckflüssigkeit kann in eine Zulaufbohrung 24, welche möglichst am obersten Punkt des Kolbenraumes 23 angebracht ist, abfließen. Von der Zulaufbohrung 24 gelangt die Luft und die Druckflüssigkeit über das Fahrtrichtungsventil 8 über eine Blende 25, welche zur Modulation des Kupplungsdruckes verwendet wird, in das Ölreservoir 5. Indem die Auslegung der Blende 20 und Blende 25 dergestalt ausgeführt ist, daß zum Durchströmen der Blende 20 ein höheres Druckniveau erzeugt wird als beim Durchströmen der Blende 25, ist gewährleistet, daß die in diesem Zustand geschlossene Kupplung 1 nicht durch verringerte Schließkraft der Feder 26 durch einen entgegenwirkenden Druck in einen Rutschzustand gelangt. Indem die Kupplung 1 mit Druckflüssigkeit permanent durchströmt wird und sich die Zulaufbohrung 24 an der obersten Stelle des Kolbenraumes befindet, ist gewährleistet, daß der Kolbenraum 23 und die Zu- und Rücklaufleitungen vollständig entlüftet sind. Auch ist die Möglichkeit bei Verwendung eines Ölreservoirs, welches sich unterhalb der Schaltkupplungen befindet, ausgeschlossen, daß bei einer Rücklaufleitung oberhalb der Oberfläche des Ölreservoirs der Kupplungsraum 10 und 23 leerläuft. Die Größe des Federspeichers 27, 28 sowie die Auslegung der Blenden 25 und 29 läßt sich exakt bestimmen, da die Berücksichtigung einer komprimierbaren unbestimmten Menge Luft in den Zuleitungen oder den Kolbenräumen der Kupplungen 1 und 2 nicht mehr berücksichtigt werden muß. Dadurch läßt sich eine exakte Schaltmodulation erreichen. Durch Umschalten des Fahrtrichtungsventils 8 wird die Kupplung 1 mit Druckflüssigkeit beaufschlagt und das Rückschlagventil 21 geschlossen. Dadurch wird die Kupplung 1 geöffnet. Gleichzeitig schließt die Kupplung 2 moduliert über der Blende 25 und wird nach Beendigung des Schließvorgangs wieder automatisch durchströmt und somit entlüftet. Durch diese Anordnung mit den Merkmalen der Erfindung wird wechselweise bei jeder Fahrtrichtungsschaltung automatisch ein Kolbenraum und die Zu- und Rückleitungen der Kupplungen 1 oder 2 entlüftet.

Ist es beabsichtigt, eine Kupplung 1 oder 2 gezielt in den Rutschzustand zu bringen, so sind die Kolbenräume 10 oder 23, je nach Stellung des Fahrtrichtungsventils 8, über ein Inchventil 30 mit in seinem Niveau veränderbaren Druck beaufschlagbar.

### Bezugszeichen

- 1: Kupplung
- 2: Kupplung
- 3: Pumpe
- 4: Filter
- 5: Ölreservoir
- 6: Druckabsicherungsventil
- 7: Bremsschaltventil
- 8: Fahrtrichtungsventil
- 9: Zulaufbohrung
- 10: Kolbenraum
- 11: Kolben
- 12: Feder
- 13: Zulaufbohrung
- 14: Rückschlagventil
- 15: Blende
- 16: Druckbegrenzungsventil
- 17: Wandler
- 18: Druckbegrenzungsventil
- 19: Wärmetauscher
- 20: Blende
- 21: Rückschlagventil
- 22: Zulaufbohrung
- 23: Kolbenraum
- 24: Zulaufbohrung
- 25: Blende
- 26: Feder
- 27: Federspeicher
- 28: Federspeicher
- 29: Blende
- 30: Inchventil

## Patentansprüche

1. Unter Last schaltbares Wendegetriebe mit einem Ölreservoir (5) mit Schaltkupplungen (1, 2), welche als Wendekupplungen verwendet und über Betätigungseinrichtungen (8) ansteuerbar sind und zur Richtungsschaltung wahlweise geschlossen bzw. geöffnet werden, wobei die Kupplungen (1, 2) durch Absenken eines Drucks im Kolbenraum (10, 23), welcher entgegen einer Federkraft einer Feder (12, 26) wirkt, über Zulaufbohrungen (9, 24) der Kupplungen (1, 2) geschlossen und durch Erhöhen eines Druckes im Kolbenraum (10, 23) geöffnet werden, **dadurch gekennzeichnet, daß** mindestens ein Kolbenraum (10, 23) mindestens zwei Zulaufbohrungen (9, 13, 22, 24) aufweist, wobei eine erste Zulaufbohrung (13, 22) über ein Ventil (14, 21) immer dann verschlossen wird, wenn eine zweite Zulaufbohrung (9, 24) mit Druck -beaufschlagt ist und durch eine erste Zulaufbohrung (13, 22) immer dann ein Flüssigkeitsstrom durch den Kolbenraum (10, 23) strömt, wenn eine zweite Zulaufbohrung (9, 24) mittels einer Betätigungseinrichtung (8) mit dem Ölreservoir (5) verbunden wird.

2. Unter Last schaltbares Wendegetriebe nach Anspruch 1, **dadurch gekennzeichnet, daß** eine zweite Zulaufbohrung (9, 24) über eine Blende (25, 29), welche mit einem rederspeicher (27, 28) verbunden ist, mit einem Ölreservoir (5) über eine Betätigungseinrichtung (8) verbunden werden kann, wobei die Blende (25, 29) dergestalt ausgelegt ist, daß die Durchströmung der Blende (25) mit Flüssigkeit aus einer ersten Zulaufbohrung (13, 22) den Druck im Kolbenraum (10, 23) nur unwesentlich erhöht.

3. Unter Last schaltbares Wendegetriebe nach Anspruch 1, **dadurch gekennzeichnet , daß** eine zweite Zulaufbohrung (9, 24) erst dann über eine Betätigungseinrichtung (8) mit Druck beaufschlagbar ist, wenn der zur Verfügung stehende Druck über einem bestimmten Wert ist.

4. Unter Last schaltbares Wendegetriebe nach Anspruch 1, **dadurch gekennzeichnet, daß** der Kolbenraum (10, 23), welcher über eine Betätigungseinrichtung (8) und eine Elende (25) mit dem Ölreservoir verbunden ist, über eine Betatigungseinrichtung (30) mit einem in seinem Niveau stufenlos veränderbaren Druck beaufschlagbar ist.

## Claims

1. Change-under-load reversing gear unit with an oil reservoir (5) and with clutches (1, 2), which are used as reversing clutches, can be controlled by way of operating devices (8) and are either engaged or disengaged to change direction, wherein the clutches (1, 2) are engaged by reducing a pressure in the piston chamber (10, 23), which acts against a spring force of a spring (12, 26), by way of feed bores (9, 24) of the clutches (1, 2) and disengaged by increasing a pressure in the piston chamber (10, 23), **characterised in that** at least one piston chamber (10, 23) comprises at least two feed bores (9, 13, 22, 24), wherein a first feed bore (13, 22) is always closed by way of a valve (14, 21) when pressure is applied to a second feed bore (9, 24) and a fluid stream always flows through the piston chamber (10, 23) through a first feed bore (13, 22) when a second feed bore (9, 24) is connected to the oil reservoir (5) by means of an operating device (8).

2. Change-under-load reversing gear unit according to Claim 1, **characterised in that** a second feed bore (9, 24) can be connected by way of an orifice (25, 29), which is connected to a spring-energy store (27, 28), to an oil reservoir (5)-by way of an operating device (8), wherein the orifice (25, 29) is designed such that the flow of fluid from a first feed bore (13, 22) through the orifice (25, 29) only increases the pressure in the piston chamber (10, 23) to a negligible degree.

3. Change-under-load reversing gear unit according to Claim 1, **characterised in that** pressure can only be applied to a second feed bore (9, 24) by way of an operating device (8) when the available pressure exceeds a certain value.

4. Change-under-load reversing gear unit according to Claim 1, **characterised in that** a pressure of a continuously variable level can be applied by way of an operating device (30) to the piston chamber (10, 23), which is connected to the oil reservoir by way of an operating device (8) and an orifice (25).

## Revendications

1. Transmission réversible pouvant être manoeuvrée sous charge, comprenant un réservoir d'huile (5), des embrayages de manoeuvre (1, 2) qui sont utilisés comme embrayages d'inversion et qui peuvent être commandés par l'intermédiaire de dispositifs d'actionnement (8) et sont fermés ou ouverts sélectivement pour le changement de direction, les embrayages (1, 2) étant fermés par l'abaissement d'une pression régnant dans la chambre de piston (10, 23) qui agit à l'encontre d'une force élastique d'un ressort (12, 26), au moyen de perçages d'alimentation (9, 24) des embrayages (1, 2), et étant ouverts par l'élévation d'une pression dans la chambre de piston (10, 23), **caractérisée en ce que**, au moins une chambre de piston (10, 23) comporte au moins deux perçages d'alimentation (9, 13, 22, 24), un premier perçage d'alimentation (13, 22) étant toujours fermé au moyen d'une soupape (14, 21) lorsqu'un deuxième perçage d'alimentation (9, 24) est chargé avec une pression, et un courant de liquide s'écoulant toujours à travers la chambre de piston (10, 23) en passant par un premier perçage d'alimentation (13, 22) lorsqu'un deuxième perçage d'alimentation (9, 24) est relié au réservoir d'huile (5) au moyen d'un dispositif d'actionnement (8).

2. Transmission réversible pouvant être manoeuvrée sous charge selon la revendication 1, **caractérisée en ce qu'**un deuxième perçage d'alimentation (9, 24) peut être relié à un réservoir d'huile (5) au moyen d'un dispositif d'actionnement (8), en passant par un étranglement (25, 29) qui est relié lui-même à un accumulateur à ressort (27, 28), l'étranglement (25, 29) étant calculé de telle manière que la traversée de l'étranglement (25) par un liquide arrivant d'un premier perçage d'alimentation (13, 22) ne fasse croître la pression dans la chambre de piston (10, 23) que d'une façon insignifiante.

3. Transmission réversible pouvant être manoeuvrée sous charge selon la revendication 1, **caractérisée en ce qu'**un deuxième perçage d'alimentation (9, 24) ne peut être chargé avec une pression au moyen d'un dispositif d'actionnement (8) que lorsque la pression disponible est supérieure à une valeur déterminée.

4. Transmission réversible pouvant être manoeuvrée sous charge selon la revendication 1, **caractérisée en ce que** la chambre de piston (10, 23, qui est reliée au réservoir d'huile au moyen d'un dispositif d'actionnement (8) et d'un étranglement (25, peut être chargé avec une pression d'un niveau variable en continu au moyen d'un dispositif d'actionnement (30).
